# EUROPEAN PATENT SPECIFICATION

(11) **EP 4 328 676 B1**
(45) Date of publication and mention of the grant of the patent: **29.04.2026**
(21) Application number: 22791671.5
(22) Date of filing: 14.04.2022
(51) Int. Cl.: B61L 15/00, G05B 9/02, G06F 11/16, G05B 19/042, G06F 11/07

(54) **DIGITAL OUTPUT APPARATUS AND METHOD FOR GENERATING DIGITAL OUTPUT**
DIGITALE AUSGABEVORRICHTUNG UND VERFAHREN ZUR ERZEUGUNG EINER DIGITALEN AUSGABE
APPAREIL DE SORTIE NUMÉRIQUE ET PROCÉDÉ DE GÉNÉRATION DE SORTIE NUMÉRIQUE

(30) Priority: 20.04.2021 JP 2021071043
(43) Date of publication of application: 28.02.2024
(73) Proprietor: Hitachi, Ltd., Tokyo 100-8280 (JP)
(72) Inventor: MIYAJI, Masayuki, Tokyo 100-8280 (JP); MORITA, Kazuki, Tokyo 100-8280 (JP)
(74) Representative: Mewburn Ellis LLP
(86) International application number: PCT/JP2022/017771
(87) International publication number: WO 2022/224897

(56) References cited:
- EP-B1- 1 291 740
- EP-B1- 1 302 382
- JP-A- 2000 276 202
- JP-A- 2005 006 376
- JP-A- 2012 103 882
- JP-A- 2013 085 318
- JP-A- H10 133 900
- US-A1- 2010 256 843

## Description

### Technical Field

The present invention relates to a digital output device and a digital output generating method that are related to a fail-safe technology. The present invention is particularly suitable for a railway safety device for controlling a railway vehicle to a safety side, for example.

### Background Art

A railway safety device requires high safety at all times, and requires fail-safe capability for controlling a railway vehicle to a safety side even when an abnormality or a failure occurs in the safety device itself or in a peripheral device.

An existing system has a configuration in which a plurality of identical computers (CPU) are provided, and a collation unit compares and collates operations of the computers, so that safety can be assured. The collation unit compares and collates computation results obtained by the computers in each computation cycle. In a case where there is a mismatch between the computation results, operation of the computers is stopped to make a transition of the system to a safety side. A CPU having such a function is called a fail-safe CPU and has been used in an existing system.

In addition, in order to obtain the fail-safe capability, alternating signals which cyclically fluctuate are used as outputs from the computers. Each computer in a fail-safe CPU has an output unit that outputs an alternating signal. As the alternating signal, a digital signal the electrical state of which cyclically alternates between H (high) and L (low) has conventionally been used.

Likewise, the collation unit outputs an alternating signal as a collation result between the computers in a normal case where the collation result is correct, while the collation unit stops the alternating signal and outputs a non-alternating signal in an abnormal case where the collation result indicates a mismatch.

The alternating signals outputted from the two computers and the alternating signal of the collation result outputted from the collation unit are then inputted to a fail-safe AND. The fail-safe AND calculates an AND of the inputted alternating signals, and outputs an alternating signal only when all the inputs are in an alternating state. The alternating signal outputted from the fail-safe AND is rectified and amplified by an AC amplifier and drives a relay.

With the configuration described above, only when outputs from the computers and an output from the collation unit are all in an alternating state, the relay is driven to output a signal to the outside. In a case where the cyclic fluctuation of the alternating signal is stopped due to an abnormality in the computes, a mismatch indicated by the collation result, or an abnormality in a circuit itself, a relay at a final stage is released, and an external output of the system is set to the safety side. Accordingly, a fail-safe configuration is formed.

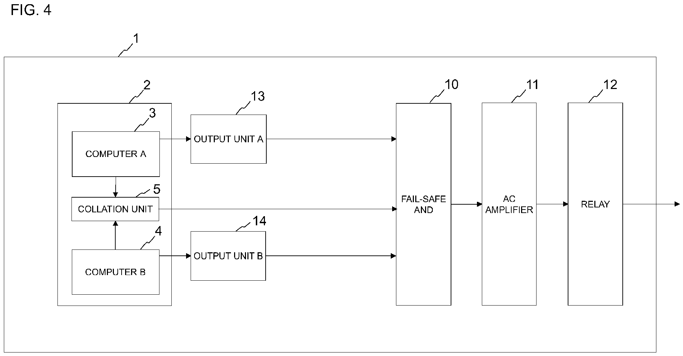

FIG. 4 is a block diagram depicting a schematic configuration of an existing system.

An on-vehicle safety device 1 includes a fail-safe CPU 2 including computers A and B (3 and 4) and a collation unit 5, output units A and B (13 and 14), a fail-safe AND 10, an AC amplifier 11, and a relay 12. In this configuration, the computers A and B generate respective alternating signals, and the output units A and B output alternating signals based on the alternating signals from the computers A and B, respectively, to the fail-safe AND 10.

In the configuration in FIG. 4, the output units A and B each convert an alternating signal to voltage for the outside and output the voltage to the fail-safe AND 10 in accordance with a 0/1 write instruction from the computers A and B. However, the computers themselves output electrical signals as the alternating signals in some cases.

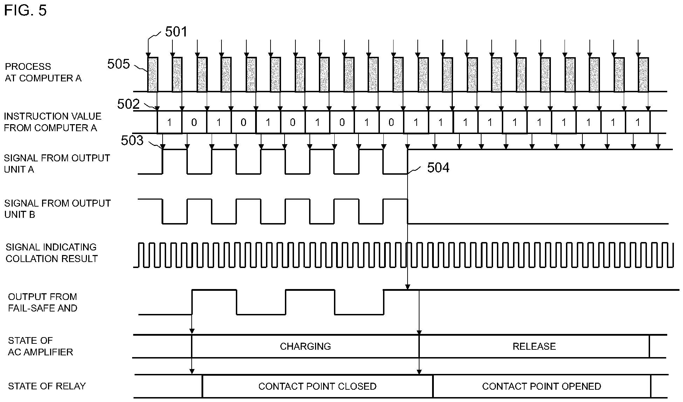

FIG. 5 is a diagram depicting a timing chart of signal output states of components constituting the existing system depicted in FIG. 4.

In the configuration depicted in FIG. 4, the computers A and B generate alternating signals to be outputted to the fail-safe AND 10. In one example of specific methods, the computers A and B each have an internal timer (not depicted), and generate triggers for generating external outputs in a fixed cycle in accordance with the timer (501). Upon generation of a trigger, the computers A and B execute a process for generating an external output according to an interruption process (505). At this point, the computers A and B generate an alternating signal of a frequency that is required for the AC amplifier 11 to perform charging, by switching a 0/1 instruction to be given to a register (not depicted) mounted in an external output unit, for example (502). This process is started by a timer interruption. To output an alternating signal, 0/1 is switched. To stop the alternating signal, either one of the values is indicated to the output unit. The output units A and B each convert the signal of 0/1 inputted from the corresponding one of the computers A and B, to an electrical signal, and output the electrical signal to the fail-safe AND 10 (503). On the other hand, to stop the output of the alternating signal, the interruption process is continuously generated, and 0 or 1 is continuously written (504).

In this manner, the existing system requires inputs of alternating signals in order to charge the AC amplifier 11. Further, it is necessary to set the fluctuation cycle of an alternating signal to a defined frequency according to characteristics of the AC amplifier 11. The fail-safe AND 10 only performs output according to the state of the alternating signal, and does not have a function of causing fluctuation of the frequency. Further, an output from the collation unit 5 depends on the operation frequencies of the computers A and B. Hence, it is necessary to generate the defined frequency for charging the AC amplifier 11, according to the outputs from the computers A and B.

In addition, in the existing system, the respective alternating signals from the computers A and B each have a fixed frequency generated through an operation of software. Therefore, the interruption process is performed at a fixed interval to operate an output signal to alternate between 0 and 1 by software, thereby generating an alternating signal. Each of the output conversion units A and B converts signals of 0 and 1 to voltages required for the fail-safe AND 10. Accordingly, conversion to electrical signals is performed.

Therefore, in the existing system, in a case where an interruption based on the timer is performed in each computer and an alternating signal of a fixed frequency required to charge the AC amplifier is generated, the process loads of the counting process using the timer and the output generation process which is performed when an interruption is received are applied to each of the computers A and B.

In this method which has been adopted in the existing system, a process for generating an interruption signal in a fixed cycle and a process of performing 0/1 switching in response to an interruption are loads applied to the computers. Here, some general microcomputers have a channel for generating a pulse output. However, such a channel is under a restriction that a counter is required and the number of ports capable of generating a pulse output in each microcomputer is limited.

In addition, in Patent Document 1, a unit different from the computers is configured to output a frequency, whereby a method for lessening a computation process load on a CPU is achieved. However, Patent Document 1 addresses improvement in productivity of an application by separating an OS and middleware from the application. Therefore, lessening the process load has yet to be achieved. JP-2000-276202-A proposes a fail-safe controller. EP 1 291 740 B1 proposes a redundant information processing system. EP 1 302 382 B1 proposes a controller having a fail-safe function. US 2010/256843 A1 system for vital brake interface with real-time integrity monitoring.

### Prior Art Document

### Patent Document

Patent Document 1: JP-2000-39902-A

### Summary of the Invention

### Problem to be Solved by the Invention

In the existing system described above, a process load does not become a problem because the computation scale of the system is small and the CPU has a margin of computation processes.

In recent years, however, there is a tendency to increase the process load on a CPU because the amount of information that is communicated between an on-vehicle safety device and a ground device or any other device is increasing, and complicated and improved functions are required for safety devices. As a result, a problem that generation of alternating signals through software processing puts strain on the other processes in a CPU has arisen.

Therefore, an object of the present invention is to provide a digital output device for generating an alternating signal that is not generated by software processing, while maintaining a conventional configuration and ensuring safety, in order to lessen a CPU process load of generating alternating signals.

### Means for Solving the Problem

The invention provides a digital output device as set out in claim 1, and a digital output generation method as set out in claim 6. In order to solve the problem described above, a representative digital output device according to the present invention includes two computers, a collation unit that collates computation results obtained by the two computers, and two output conversion units that receive output instructions based on the respective computation results obtained by the two computers. The collation unit outputs a first alternating signal when the computation results match each other, and each of the two output conversion units outputs a second alternating signal when the output instruction is an alternating signal output instruction, or outputs a non-alternating signal when the output instruction is an alternating signal stop instruction.

### Advantages of the Invention

According to the present invention, the output conversion units that output alternating signals of a fixed frequency on the basis of the output instructions from the computers are provided. With this configuration, it is possible to lessen a CPU process load without modifying the existing system configuration. In addition, a check unit that monitors a frequency output from the corresponding output conversion unit may be provided. With this configuration, the CPU detects a failure in the output conversion unit, and further, the system is prevented from operating on a non-safety side, so that safety that is equivalent to that provided by the conventional method can be ensured.

Any other problems, configurations, and effects will become apparent from the following explanation in a mode for carrying out the invention.

### Brief Description of the Drawings

FIG. 1 is a block diagram depicting a schematic configuration of an on-vehicle safety device according to an embodiment of the present invention.
FIG. 2 is a diagram depicting a timing chart of signal output states of components constituting the on-vehicle safety device.
FIG. 3 is a diagram depicting a timing chart of behaviors in a case where an abnormality occurs, in the signal output states of the components constituting the on-vehicle safety device.
FIG. 4 is a block diagram depicting a schematic configuration of an existing system.
FIG. 5 is a diagram depicting a timing chart of signal output states of components constituting the existing system.
FIG. 6 is a diagram depicting a timing chart of operation states of check units in addition to the signal output states of the components constituting the on-vehicle safety device.

### Mode for Carrying Out the Invention

As a mode for carrying out the present invention, an embodiment will be explained below in detail with reference to the drawings. Identical components are denoted by the same reference symbol throughout the drawings.

### [Embodiment]

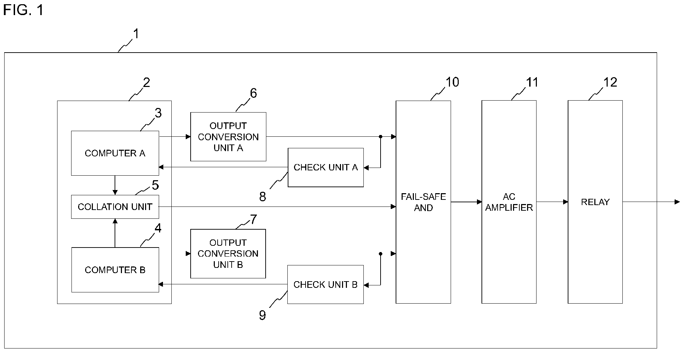

FIG. 1 is a block diagram depicting a schematic configuration of an on-vehicle safety device according to the embodiment of the present invention.

An on-vehicle safety device 1 includes a fail-safe CPU 2. The fail-safe CPU 2 includes two computers 3 and 4 and a collation unit 5 that collates computation results obtained by the respective computers. Here, the two computers 3 and 4 are referred to as a computer A and a computer B, respectively. Output channels (not depicted in FIG. 1) corresponding to the computers A and B are referred to as a channel A and a channel B, respectively.

Further, the on-vehicle safety device 1 includes, as a configuration for performing an output concerning safety, output conversion units 6 and 7 that receive signals from the computers 3 and 4, respectively, and each output an alternating signal or a non-alternating signal of a fixed frequency, and check units 8 and 9 that receive alternating signals outputted from the output conversion units 6 and 7. Here, the two output conversion units 6 and 7 are referred to as an output conversion unit A and an output conversion unit B, respectively. The check units 8 and 9 corresponding to the respective output conversion units A and B are referred to as a check unit A and a check unit B, respectively.

That is, the present invention is characterized by a digital output device including the fail-safe CPU 2 that includes the computer A (3), the computer B (4), and the collation unit 5, the output conversion unit A (6) and the output conversion unit B (7), and the check unit A (8) and the check unit B (9).

Moreover, the on-vehicle safety device 1 includes a fail-safe AND 10 that logically synthesizes signals from the output conversion units A and B and a signal from the collation unit of the digital output device and that outputs an alternating signal only when all the inputted signals are in an alternating state, an AC amplifier 11 that rectifies and amplifies the output from the fail-safe AND 10 so as to drive a relay 12, and the relay 12 that outputs a control signal to the outside.

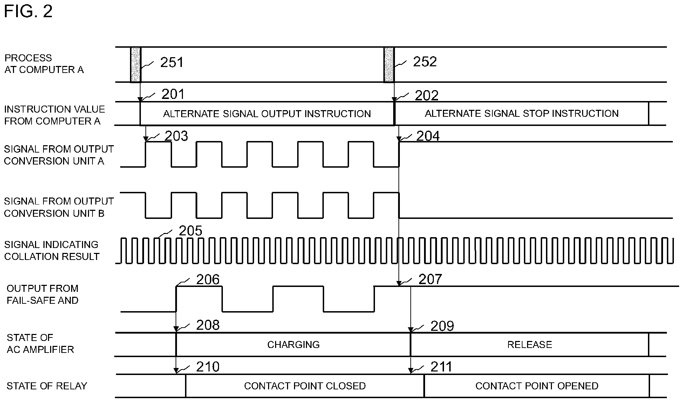

FIG. 2 is a diagram depicting a timing chart of signal output states of the components constituting the on-vehicle safety device.

The computer A and the computer B each output an alternating signal output instruction (201) or an alternating signal stop instruction (202) to the output conversion units A and B on the basis of computation results (251 or 252) of the respective computers A and B.

When having received the alternating signal output instruction (201), the output conversion unit A/B outputs an alternating signal (203) having a frequency required for the AC amplifier 11 to accumulate electric charges in a coil of the relay 12, on the basis of an instruction value from the computer A/B. When having received the alternating signal stop instruction 202 from the computer A/B, on the other hand, the output conversion unit A/B outputs a non-alternating signal (204) instead of an alternating signal.

As long as the stop state of the alternating signal does not show a cyclic signal fluctuation, the signal level status (being electrically H or L) under the stop state has no influence on the system.

In addition, the collation unit 5 collates the computation results obtained by the computers A and B, and outputs an alternating signal (205) when operations of the two computers A and B match each other. The alternating signal 205 indicates the collation result obtained by the collation unit 5 and has no influence on the computations at the computers A and B.

The alternating signals outputted from the output conversion units A and B and the alternating signal outputted from the collation unit 5 are inputted to the fail-safe AND 10. The fail-safe AND 10 is a circuit formed by a flip-flop or the like, specifically. A signal inputted to the fail-safe AND 10 becomes a clock source for another signal, so that the fail-safe AND 10 outputs an alternating signal (206) only when all signals are in an alternating state.

This alternating signal is rectified and amplified by the AC amplifier 11. Only when the fail-safe AND 10 outputs an alternating signal of a fixed frequency, the coil of the relay 12 is in a pressured state (208). Accordingly, only when the outputs from the output conversion units A and B and the output from the collation unit 5 are all in an alternating state, an externally output state (in which the coil of the relay 12 is pressurized and the contact point is closed) is established (210).

When the computers A and B output alternating signal stop instructions, input of the alternating signals to the fail-safe AND 10 is stopped. Then, the alternating signal from the fail-safe AND 10 is stopped (207). Accordingly, supply of electric charges from the AC amplifier 11 is stopped to release electric charges in the coil of the relay 12 (209), and the contact point of the relay 12 for outputting a control signal to the outside is opened (211).

Here, for an alternating signal to be inputted to the AC amplifier 11, it is necessary to use a frequency complying with hardware specifications required to accumulate electric charges. Only when the alternating signal from the fail-safe AND 10 has a fixed frequency, electric charges are accumulated in the coil of the relay 12. This fixed frequency is generated inside the output conversion unit A or B.

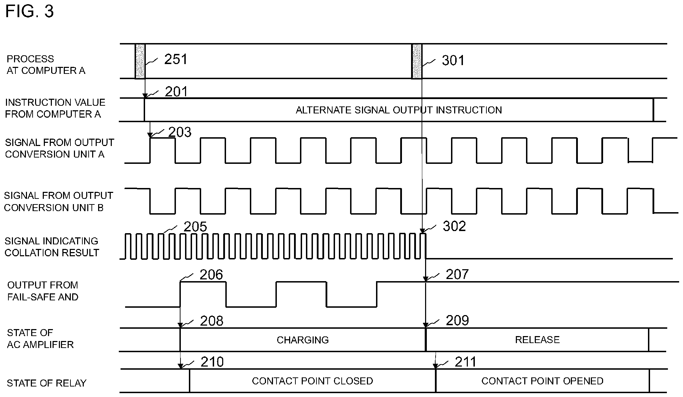

FIG. 3 is a diagram, which is similar to FIG. 2, depicting a timing chart of behaviors in a case where an abnormality occurs, in the signal output states of the components constituting the on-vehicle safety device.

In a case where the fail-safe CPU 2 detects an abnormality such as a case where the collation unit 5 detects a mismatch between the computation results obtained by the computer A and the computer B or a case where the computer A and/or the computer B detects an abnormality and stops its operation (301), the alternating signal from the collation unit 5 is stopped (302).

Accordingly, the alternating signal from the collation unit 5 is stopped although the signals from the output conversion units A and B are in an alternating state. Thus, by logic synthesis at the fail-safe AND 10, the alternating signal from the fail-safe AND 10 is stopped (207).

In this manner, in a case where the computer A and/or the computer B detects a failure, in a case where there is a mismatch between the computation results obtained by the computers A and B due to an abnormality in the hardware or the computers and the collation unit 5 detects the mismatch and stops the alternating signal, or in a case where the alternating signal from at least one of the output conversion units A and B is stopped due to a route abnormality, the alternating signal from the fail-safe AND 10 is stopped (207). Then, supply of electric charges from the AC amplifier 11 is cut off (209), whereby the contact point of the relay 12 is released (211).

As explained so far, the configuration of the on-vehicle safety device according to the embodiment of the present invention has the fail-safe capability against occurrence of an abnormality.

In addition, compared to the configuration of the existing system depicted in FIG. 4, in the configuration according to the embodiment of the present invention depicted in FIG. 1, it is sufficient that the computer A/B issues an instruction for output of an alternating signal or stop of an alternating signal to the output conversion unit A/B. Therefore, since the output conversion units generate a frequency through a counting process using a timer and an output generating process, a process load on the computers is lessened.

Next, since a failure may occur in the output conversion unit A or B, an unintended alternating signal may continuously be outputted. If so, the fail-safe AND 10 also continues the output of an alternating signal in response to the unintended alternating signal.

In a normal case, the alternating signal from the output conversion unit A or B is stopped in response to the alternating signal stop instruction issued by the computer A or B, and then, the alternating signal from the fail-safe AND 10 is stopped. As a result, the external output is set to a safety side.

However, if the output conversion units A and B continue the output of alternating signals in spite of the stop instruction from the computer A or B, the system cannot be controlled to a safety side.

For this reason, the configuration in FIG. 1 includes the check units A and B configured to monitor the respective output states of the output conversion units A and B by receiving the alternating signals from the respective output conversion units A and B such that the computers A and B can monitor the respective states of the output conversion units A and B.

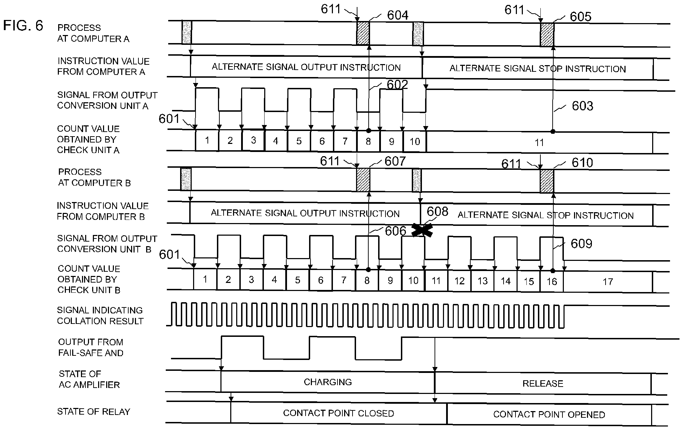

FIG. 6 is a diagram depicting a timing chart of the operation states of the check units A and B in addition to the signal output states of the components constituting the on-vehicle safety device in FIG. 2 or 3. The operation states of the computers A and B, the collation unit 5, the fail-safe AND 10, the AC amplifier 11, and the relay 12 are the same as those in FIGS. 2 and 3.

The check units A and B are provided on respective output lines of the computers A and B, receive alternating signals from the respective output conversion units A and B, and count pulses of the respective alternating signals (601). In the example in FIG. 6, each of the check units A and B counts rising and falling edges of the pulses of the alternating signal. The computers A and B access the respective check units A and B at a fixed time interval and obtain the count values of the alternating signals obtained by the respective check units A and B (602, 603, 606, and 609) .

The computers A and B compare the count values obtained from the respective check units A and B with the count values obtained by the previous access, and detect the presence/absence and frequency of an output of an alternating signal from the respective output conversion units A and B in reference to the fixed access time interval. The computers A and B compare the output states thereof to the respective output conversion units A and B with the count values of the alternating signals obtained from the respective check units A and B (604, 605, 607, and 610).

As a result of the comparison, in a case where the output of the computer itself does not match the count value, that is, in a case where stop of the alternating signal or an abnormal value is detected while the alternating signal output instruction has been issued, or in a case where output of an alternating signal is detected as a count value while the alternating signal stop instruction has been issued, the computer A or B having detected so determines that an abnormality occurs in the corresponding output conversion unit A or B (610 in FIG. 6).

If the abnormality is determined, the corresponding computer stops its operation to prevent the output from being set to an unsafety side. Compared to the existing configuration (which is depicted in FIG. 4), the process of checking the output state is added while the process of generating an alternating signal output is omitted. However, the cycle of the checking process can be made longer to some extent than the output generating process. Thus, no strain is caused on the computations at the computers.

A specific example of the abnormality determination described above will be explained with reference to FIG. 6. FIG. 6 depicts a case where the output stop instruction has been issued by the computer B but the output from the output conversion unit B is not stopped.

At the computer A, a count value of 8 is obtained by a first-time count value check (602), and a count value of 11 is obtained by a second-time count value check (603). In FIG. 6, a fixed count value is obtained in a first-time cycle, and a value less than a predetermined count value is obtained in a second-time cycle. This shows that the output conversion unit A has normally stopped the alternating signal under the alternating signal output instruction.

In contrast, at the computer B, output of the alternating signal from the output conversion unit B continues (608) although the alternating signal stop instruction has been issued by the computer B. Therefore, a count value of 8 is obtained by the first-time count value check (606), but a count value of 16, which cannot normally be obtained, is obtained as a predetermined value by the second-time count value check (609). As a result, the computation unit B determines that the alternating signal is being outputted from the output conversion unit B, and detects this condition as an abnormality in the output conversion unit B.

Accordingly, since the computer B detects an abnormality in the output conversion unit B, output of the alternating signal from the collation unit 5 is stopped, so that the output can be prevented from being set to an unsafety side.

Further, depending on the timing of the alternating signal output instruction or the alternating signal stop instruction, the alternating signal may be obtained as a transient numerical value. Therefore, there may be adopted a method involving checking the count value not only once but multiple times in a fixed time period and detecting an abnormality when an abnormal value is constantly detected.

As explained so far, the computers A and B can confirm the output states of the respective output conversion units A and B by cyclically checking the count values of the respective check units A and B.

Next, in an another abnormal case, that is, in a case where a failure occurs in the output conversion unit A or B while the output from this output conversion unit is stopped, the check value is normally 0, and thus, is determined to be normal if the alternating signal output instruction is not given from the computer A or B. Accordingly, the failure may be hidden.

In this abnormal case, the system is on a safety side, and thus, this abnormality has no influence on the fail-safe capability of the system. However, an operational problem that, for example, it is not until a brake is about to be released that the abnormality appears may arise. Thus, there arises a problem that, for example, it is not until a brake command is issued that a failure appears. To address this problem, it is desired to provide a mechanism for detecting such a failure during a maintenance work.

In the configuration of the on-vehicle safety device depicted in FIG. 1, in initialization of the system after supply of a power source, the computers A and B simulatively output respective alternating signals at a fixed interval, whereby it is confirmed that, as a result of the outputs from the respective computers A and B, the count values of the respective check units A and B are not 0. Consequently, soundness of each of the output conversion units A and B and the check units A and B can be checked.

In this case, the output frequency may be checked while a count value according to the fixed output interval is used as a determination criterion for the count values obtained by the respective computers A and B. When the check result shows that, for example, the count value is 0 or an abnormal value, the computer A or B determines a failure and reports the failure. Consequently, a hidden abnormality can be prevented.

However, in a case where the operation mode described above is added, an alternating signal is generated as a simulative output. Hence, it is desired to provide a mechanism unit for avoiding a temporary output.

In addition, an abnormality in routes between the output conversion units A and B and the check units A and B can be detected by the method described above, but, there may also be adopted a method in which the two computers A and B collate the count values and the results obtained by themselves with each other and detect an abnormality in the computers themselves if there is a difference as a result of the collation. That is, the two computers collate the results of calculations using the count values with each other, so that an error in computation results of the two computers can be detected.

Moreover, each of the output conversion units A and B and the check units A and B may be formed by a logic IC, or may be formed by a programmable device such as an FPGA. In the case of this configuration, in order to avoid an unsafety-side operation caused by a single failure, it is desirable that each of the output conversion units A and B be formed by one individual programmable device for the corresponding computer A or B. In addition, it is desirable that the check units A and B be formed by devices that are separate from the corresponding output conversion units A and B of the same channel.

The embodiment of the present invention has been explained, but the present invention is not limited to the embodiment described above. Various modifications can be made within the scope of the present invention, which is defined by the appended claims.

### Description of Reference Symbols

1: On-vehicle safety device
2: Fail-safe CPU
3, 4: Computer
5: Collation unit
6, 7: Output conversion unit
8, 9: Check unit
10: Fail-safe AND
11: AC amplifier
12: Relay
13, 14: Output unit
201, 202: Instruction from computer to output conversion unit
203, 204: Change in alternating signal output in response to instruction from computer to output conversion unit
205: Signal of collation result from collation unit
206, 207: Output signal from fail-safe AND
208, 209: State change of AC amplifier according to state of output signal from fail-safe AND
210, 211: State change of relay according to state of AC amplifier
251, 252: Computation process at computer
301: Detection of abnormality at fail-safe CPU
302: Stop of alternating signal of collation result, by detection of abnormality
501: Interruption signal for generating alternating signal at computer
502: Output instruction from computer to output unit
503: Output state of output unit
504: Stop of alternating signal from output unit
505: Process of generating output signal at computer
601: Alternating signal detected by check unit
602, 603, 606, 609: Count value at check unit obtained by computer
604, 605, 607, 610: Obtainment and confirmation of count value by computer
608: Mismatch between instruction from computation unit and output from output conversion unit
611: Start timing of confirmation process at check unit in computer

## Claims

1. A digital output device comprising:
two computers (3, 4) which are each configured to output as a computation result either an alternating signal output instruction (201) or an alternating signal stop instruction (202);
a collation unit that is configured to collate the computation results obtained by the two computers and output a first alternating signal when the computation results obtained by the two computers match each other and to stop the first alternating signal and output a fixed, non-alternating, signal when the collation result indicates a mismatch;
two output conversion units, each configured to receive computation results from a respective one of the two computers and to output a respective second alternating signal when the output instruction is an alternating signal output instruction, or output a non-alternating signal when the output instruction is an alternating signal stop instruction; and
two check units that are each configured to count the pulses of the respective second alternating signals outputted from the two output conversion units and to output a count value, and
a fail-safe circuit (10) configured to receive the output of the collation unit and the outputs of the two signal conversion units and to output an alternating signal (206) only when all three of the input signals are in the alternating state;
wherein
each of the two computers is configured to obtain the count value from the corresponding check unit and to determine, from the count value, whether a corresponding one of the two output conversion units is outputting the second alternating signal while the alternating signal output instruction has been issued and whether the corresponding one of the two output conversion units is outputting the non-alternating signal while the alternating signal stop instruction has been issued.

2. The digital output device according to claim 1, wherein
each of the two computers is configured to check the count value obtained from a corresponding one of the two check units, multiple times during a fixed time period.

3. The digital output device according to claim 1 or 2, wherein,
in initialization of the digital output device, each of the two computers is configured to simulatively output the alternating signal output instruction to confirm soundness of the two output conversion units and the two check units on a basis of the respective count values obtained from the two check units.

4. The digital output device according to any one of claims 1 to 3, wherein
each of the two computers is configured to detect an abnormality in the computer itself by collating the respective count values obtained from the two check units.

5. The digital output device according to any one of claims 1 to 4, wherein
the two output conversion units and the two check units are formed by logic ICs or FPGAs.

6. A digital output generation method comprising:
a first step of collating respective computation results obtained by two computers (3, 4) and outputting a first alternating signal when a result of the collation indicates matching and to stop the first alternating signal and output a fixed, non-alternating, signal when the collation result indicates a mismatch;
a second step of outputting a respective second alternating signal on the basis of the respective computation results obtained by the two computers, to issue a respective instruction (201) to output an alternating signal or outputting a non-alternating signal to issue an instruction (202) to stop an alternating signal, and
a third step of determining, by the two computers, from count values obtained by counting the pulses of the respective second alternating signals, whether the second alternating signals are being outputted while the corresponding instruction to output the alternating signal has been issued and whether the non-alternating signal is being outputted while the corresponding instruction to stop the alternating signal has been issued.

## Patentansprüche

1. Digitale Ausgabeeinheit, umfassend:
zwei Computer (3, 4), die jeweils konfiguriert sind, als Rechenergebnis entweder einen Wechselsignalausgabebefehl (201) oder einen Wechselsignalstoppbefehl (202) auszugeben;
eine Vergleichseinheit, die konfiguriert ist, um die von den zwei Computern erhaltenen Rechenergebnisse zu vergleichen und ein erstes Wechselsignal auszugeben, wenn die von den zwei Computern erhaltenen Rechenergebnisse übereinstimmen, und das erste Wechselsignal zu stoppen und ein festgelegtes Nichtwechselsignal auszugeben, wenn das Vergleichsergebnis keine Übereinstimmung anzeigt;
zwei Ausgabeumwandlungseinheiten, die jeweils konfiguriert sind, um Rechenergebnisse von einem entsprechenden aus den zwei Computern zu empfangen und ein entsprechendes zweites Wechselsignal auszugeben, wenn der Ausgabebefehl ein Wechselsignalausgabebefehl ist, oder ein Nichtwechselsignal auszugeben, wenn der Ausgangsbefehl ein Wechselsignalstoppbefehl ist; und
zwei Prüfungseinheiten, die jeweils konfiguriert sind, um die Pulse der entsprechenden zweiten Wechselsignale, welche von den zwei Ausgabeumwandlungseinheiten ausgegeben wurden, zu zählen und einen Zählwert auszugeben, und
eine ausfallsichere Schaltung (10), die konfiguriert ist, um die Ausgabe der Vergleichseinheit und die Ausgaben der zwei Signalumwandlungseinheiten zu empfangen und ein Wechselsignal (206) nur auszugeben, wenn sich alle drei der eingegebenen Signale im Wechselzustand befinden;
wobei
jeder aus den zwei Computern konfiguriert ist, um den Zählwert von der entsprechenden Prüfungseinheit zu erhalten und anhand des Zählwerts zu bestimmen, ob eine entsprechende aus den zwei Ausgabeumwandlungseinheiten das zweite Wechselsignal ausgibt, während der Wechselsignalausgabebefehl erteilt wurde, und ob die entsprechende aus den zwei Ausgabeumwandlungseinheiten das Nichtwechselsignal ausgibt, während der Wechselsignalausgabebefehl erteilt wurde.

2. Digitale Ausgabevorrichtung nach Anspruch 1, wobei
jeder aus den zwei Computern konfiguriert ist, um den Zählwert, der von einer entsprechenden aus den zwei Prüfungseinheiten erhalten wurde, mehrere Male während eines festgelegten Zeitraums zu prüfen.

3. Digitale Ausgabevorrichtung nach Anspruch 1 oder 2, wobei
beim Initialisieren der digitalen Ausgabevorrichtung jeder aus den zwei Computern konfiguriert ist, um simulativ den Wechselsignalausgabebefehl auszugeben, um die Zuverlässigkeit der zwei Ausgabeumwandlungseinheiten und der zwei Prüfungseinheiten auf Basis der entsprechenden Zählwerte, die von den zwei Prüfungseinheiten erhalten wurden, zu bestätigen.

4. Digitale Ausgabevorrichtung nach einem der Ansprüche 1 bis 3, wobei
jeder aus den zwei Computern konfiguriert ist, um eine Anomalie in dem Computer selbst durch Vergleichen der entsprechenden Zählwerte, die von den zwei Prüfungseinheiten erhalten wurden, zu detektieren.

5. Digitale Ausgabevorrichtung nach einem der Ansprüche 1 bis 4, wobei
die zwei Ausgabeumwandlungseinheiten und die zwei Prüfungseinheiten durch Logik-ICs oder FPGAs ausgebildet sind.

6. Digitales Ausgabeerzeugungsverfahren, umfassend:
einen ersten Schritt des Vergleichens von entsprechenden, von zwei Computern (3, 4) erhaltenen Rechenergebnissen, und Ausgebens eines ersten Wechselsignals, ein Ergebnis des Vergleichs eine Übereinstimmung anzeigt, und Stoppens des ersten Wechselsignals und Ausgebens eines festgelegten Nichtwechselsignals, wenn das Vergleichsergebnis keine Übereinstimmung anzeigt;
einen zweiten Schritt des Ausgebens eines entsprechenden zweiten Wechselsignals auf Basis der entsprechenden Rechenergebnisse, die von den zwei Computern erhalten wurden, um einen entsprechenden Befehl (201) zum Ausgeben eines Wechselsignals zu erteilen, oder des Ausgebens eins Nichtwechselsignals, um einen Befehl (202) zum Stoppen eines Wechselsignals zu erteilen, und
einen dritten Schritt des Bestimmens, durch die zwei Computer, anhand von Zählwerten, die durch Zählen der Pulse der entsprechenden zweiten Wechselsignale erhalten wurden, ob die zweiten Wechselsignale ausgegeben werden, während der entsprechende Befehl zum Ausgeben des Wechselsignals erteilt wurde, und ob das Nichtwechselsignal ausgegeben wird, während der entsprechende Befehl zum Stoppen des Wechselsignals erteilt wurde.

## Revendications

1. Dispositif de sortie numérique, comprenant :
deux ordinateurs (3, 4) qui sont chacun configurés pour délivrer en sortie en tant que résultat de calcul soit une instruction de sortie de signal alternatif (201) soit une instruction d'arrêt de signal alternatif (202) ;
une unité de collationnement qui est configurée pour collationner les résultats de calcul obtenus par les deux ordinateurs et délivrer en sortie un premier signal alternatif lorsque les résultats de calcul obtenus par les deux ordinateurs correspondent l'un à l'autre et pour arrêter le premier signal alternatif et délivrer en sortie un signal fixe, non alternatif, lorsque le résultat de collationnement indique une absence de correspondance ;
deux unités de conversion de sortie, chacune configurée pour recevoir des résultats de calcul à partir d'un certain respectif des deux ordinateurs et pour délivrer en sortie un second signal alternatif respectif lorsque l'instruction de sortie est une instruction de sortie de signal alternatif, ou délivrer en sortie un signal non alternatif lorsque l'instruction de sortie est une instruction d'arrêt de signal alternatif ; et
deux unités de contrôle qui sont configurées chacune pour compter les impulsions des seconds signaux alternatifs respectifs délivrés en sortie par les deux unités de conversion de sortie et pour délivrer en sortie une valeur de comptage, et
un circuit à sécurité intégrée (10) configuré pour recevoir la sortie de l'unité de collationnement et les sorties des deux unités de conversion de signal et pour délivrer en sortie un signal alternatif (206) uniquement lorsque la totalité des trois signaux d'entrée sont dans l'état alternatif ;
dans lequel
chacun des deux ordinateurs est configuré pour obtenir la valeur de comptage à partir de l'unité de contrôle correspondante et pour déterminer, à partir de la valeur de comptage, si une certaine correspondante des deux unités de conversion de sortie délivre en sortie le second signal alternatif pendant que l'instruction de sortie de signal alternatif a été émise et si la certaine correspondante des deux unités de conversion de sortie délivre en sortie le signal non alternatif pendant que l'instruction d'arrêt de signal alternatif a été émise.

2. Dispositif de sortie numérique selon la revendication 1, dans lequel
chacun des deux ordinateurs est configuré pour vérifier la valeur de comptage obtenue à partir une certaine correspondante des deux unités de contrôle, plusieurs fois pendant une période de temps fixe.

3. Dispositif de sortie numérique selon la revendication 1 ou 2, dans lequel
lors de l'initialisation du dispositif de sortie numérique, chacun des deux ordinateurs est configuré pour délivrer en sortie simultanément l'instruction de sortie de signal alternatif afin de confirmer la validité des deux unités de conversion de sortie et des deux unités de contrôle sur la base des valeurs de comptage respectives obtenues à partir des deux unités de contrôle.

4. Dispositif de sortie numérique selon l'une quelconque des revendications 1 à 3, dans lequel
chacun des deux ordinateurs est configuré pour détecter une anomalie dans l'ordinateur lui-même en collationnant les valeurs de comptage respectives obtenues à partir des deux unités de contrôle.

5. Dispositif de sortie numérique selon l'une quelconque des revendications 1 à 4, dans lequel
les deux unités de conversion de sortie et les deux unités de contrôle sont formées par des circuits intégrés logiques ou des FPGA.

6. Procédé de génération de sortie numérique, comprenant :
une première étape de collationnement de résultats de calcul respectifs obtenus par deux ordinateurs (3, 4) et de délivrance en sortie d'un premier signal alternatif lorsqu'un résultat du collationnement indique une correspondance et d'arrêt du premier signal alternatif et de délivrance en sortie d'un signal fixe, non alternatif, lorsque le résultat de collationnement indique une absence de concordance ;
une deuxième étape consistant à délivrer en sortie un second signal alternatif respectif sur la base des résultats de calcul respectifs obtenus par les deux ordinateurs, pour délivrer une instruction respective (201) afin de délivrer en sortie un signal alternatif ou de délivrer en sortie un signal non alternatif pour émettre une instruction (202) pour arrêter un signal alternatif, et
une troisième étape de détermination, par l'intermédiaire des deux ordinateurs, à partir de la valeur de comptage obtenue en comptant les impulsions des seconds signaux alternatifs respectifs, si les seconds signaux alternatifs sont émis alors que l'instruction correspondante pour délivrer en sortie le signal alternatif a été émise, et si le signal non alternatif est délivré en sortie alors que l'instruction correspondante pour arrêter le signal alternatif a été émise.
